# EUROPÄISCHE PATENTSCHRIFT

(11) **EP 2 006 068 B1**
(45) Veröffentlichungstag und Bekanntmachung des Hinweises auf die Patenterteilung: **20.10.2010**
(21) Anmeldenummer: 08011101.6
(22) Anmeldetag: 19.06.2008
(51) Int. Cl.: B29C 45/33

(54) **Schiebersicherung für Spritzgießwerkzeuge**
Slide lock for injection moulding tools
Retenue de coulisseau pour outils de moulage par injection

(30) Priorität: 21.06.2007 AT 9602007
(43) Veröffentlichungstag der Anmeldung: 24.12.2008
(73) Patentinhaber: ifw Manfred Otte GmbH, 4563 Micheldorf (AT)
(72) Erfinder: Aschermayr, Josef, 4563 Micheldorf (AT)
(74) Vertreter: Landgraf, Elvira

(56) Entgegenhaltungen:
- EP-A- 1 157 803
- FR-A- 2 809 344
- SU-A1- 876 459
- US-A- 5 312 243

## Beschreibung

Die Erfindung betrifft eine Schiebersicherung für Spritzgießwerkzeuge.

Beim Entformen eines Spritzgussformstücks wird die äußere Form geöffnet und der Kern muss aus dem Inneren der Form heraustransportiert werden um das fertige Spritzgussteil aus der Form zu entnehmen oder auszuwerfen.
Der Kern wird dabei in einer Linearführung in die Auswurfposition geführt und in der Endposition gesichert.
Dies erfolgt meist durch eine mechanische Konstruktion, die allerdings sehr fehleranfällig ist, da sie sehr viele bewegliche Teile aufweist, deren Abstimmung untereinander nur sehr schwer möglich ist.
Nach dem Auswerfen bzw. der Entnahme des Spritzgussformstücks wird die Form für den nächsten Spritzgussvorgang wieder geschlossen und der Kern positioniert.

Schiebersicherungen sind der US 5 312 243, der EP 1 157 803, der SU 876 453 und der FR 2 809 344 bekannt.

Aufgabe der Erfindung war es, eine Schiebersicherung bereitzustellen, die den Kern zuverlässig auf einfache Weise sichern kann.

Gegenstand der Erfindung ist daher eine Schiebersicherung für Spritzgießwerkzeuge, dadurch gekennzeichnet, dass die Schiebersicherung aus einem beweglichen Sicherungsstift, einer schwenkbaren Lasche und einem Steuerblock besteht, wobei der Sicherungsstift im Steuerungsblock während des Öffnungs- und Schließvorgangs der Spritzgussform einen definierten Weg entlang einer 2 oder 3 dimensionalen Kontur beschreibt.

Ein weiterer Gegenstand der Erfindung ist eine Schiebersicherung für Spritzgießwerkzeuge, dadurch gekennzeichnet, dass der Schieber in der Endposition elektromagnetisch, pneumatisch oder hydraulisch gesichert wird.

Dabei wird der Schieber nach Beendigung des Spritzgießvorgangs so geführt, dass der Sicherungsstift von seiner Ausgangsposition während des Öffnens der Spritzgussform und dem Entfernen des Kerns Etagen tiefer bis zu einer vorläufigen Endposition geführt wird. In dieser vorläufigen Endposition wird der Kern fixiert und das Spritzgussformstück kann entnommen bzw. ausgeworfen werden.

Anschließend wird die Form wieder geschlossen und der Schieber bewegt sich Etagen wieder zurück in seine ursprüngliche Ausgangsposition, ein weiterer Spritzgießvorgang wird durchgeführt.

In einer bevorzugten Ausführungsform wird der Schieber jeweils über mehrere Etagen von seinem Ausgangspunkt tiefer zu einer vorläufigen Endposition geführt und anschließend wieder über mehrere Etagen zurück zu seinem Ausgangspunkt geführt.

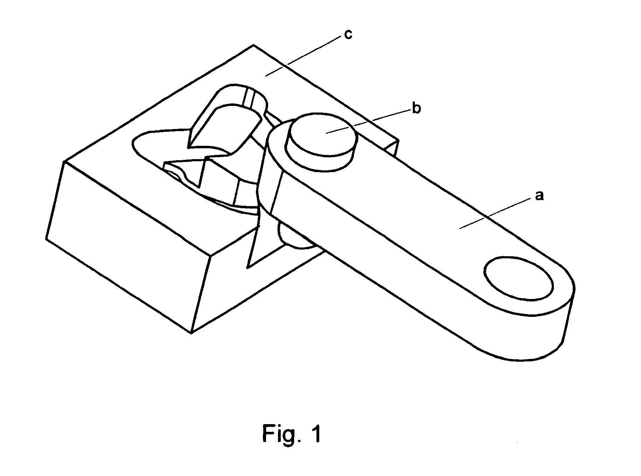

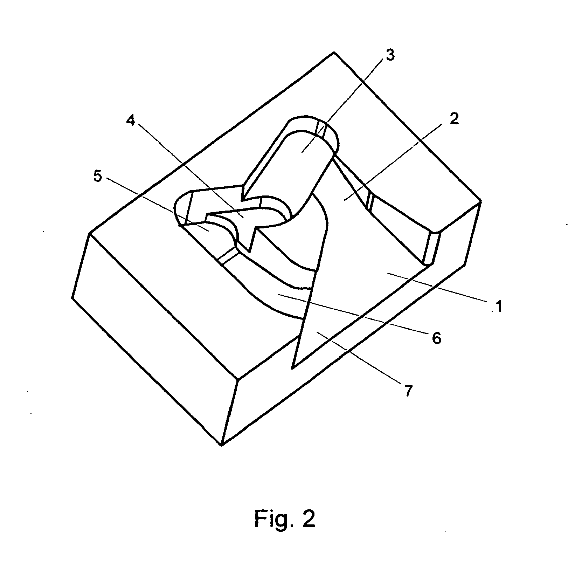

In den Fig. 1 und 2 ist eine erfindungsgemäße Schiebersicherung dargestellt.

Dabei stellt Fig.1 eine erfindungsgemäße Ausführung des Schiebers dar.
In Fig. 1 bedeuten a die schwenkbare Lasche, b den Sicherungsstift und c den Steuerblock.

In Fig. 2 ist die erfindungsgemäße Ausführung des Steuerblocks dargestellt, sowie der Weg, den der Sicherungsstift beschreibt.
1. Ausgangsposition, der Schieber bewegt sich nach hinten.
2. Der Sicherungsstift bewegt sich über eine Schräge und wird dabei angehoben. Die Lasche lenkt dabei aus.
3. Der Sicherungsstift bewegt sich über eine Kante und springt dadurch eine Stufe tiefer.
4. Der Schieber bewegt sich durch die Kulissensteuerung nun kurz in entgegengesetzter Richtung und springt dadurch wieder eine Stufe tiefer. Hier ist die vorläufige Endposition erreicht. Der Schieber ist nun gesichert und die Kulissensteuerung kann nun aus dem Schieber herausfahren.
5. Die Form schließt sich wieder, die Kulissensteuerung greift wieder ein und bewegt den Schieber wieder ein Stück nach hinten. Die Lasche schwenkt nach links aus und der Sicherungsstift fällt dabei auf die tiefste Position ab.
6. Ab jetzt bewegt sich der Schieber wieder nach vorne und der Sicherungsstift verlässt den Steuerblock über die ansteigende Schräge und wird dabei wieder angehoben.
7. Endposition (entspricht der Ausgangsposition)

Die Höhe, Tiefe und die Winkelungen können dabei je nach Form der Kulisse angepasst werden.
In der Kulisse kann ein optisches, elektrisches oder elektromagnetisches Element den Schaltvorgang auslösen, das den Weg des Sicherungsstiftes verfolgen kann.

In einer weiteren Ausführungsform kann der Schieber in seiner Endposition zusätzlich elektromagnetisch, pneumatisch oder hydraulisch in Position 5 verriegelt bzw. anschließend gehoben werden. Dabei kann der Steuerblock einfacher konstruiert werden, da eine exakte Ausführung der Bahnen in diesem Fall nicht wesentlich ist.
Die Steuerung kann dabei durch Steuerpunkte (Sensoren) in der Kulisse erfolgen.

Die erfindungsgemäße Schiebersicherung kann beispielsweise in Spritzgusswerkzeugen oder Druckgusswerkzeugen eingesetzt werden.

## Patentansprüche

1. Schiebersicherung für Spritzgießwerkzeuge, mit einem beweglichen Sicherungsstift (b), und einer schwenkbare Lasche (a) **dadurch gekennzeichnet, dass** die Schiebersicherung aus einem Steuerblock (c, Fig. 1) besteht, wobei der Sicherungsstift (b) im Steuerblock (c) während des Öffnungs- und Schließvorgangs der Spritzgussform einen definierten Weg über eine 2- oder 3 dimensionale Kontur beschreibt.

2. Schiebersicherung nach Anspruch 1, **dadurch gekennzeichnet, dass** der Schieber während des Öffnens der Spritzgussform über mindestens 2 Stufen (2, 3, Fig. 2) tiefer zu einer vorläufigen Endposition (4) geführt wird.

3. Schiebersicherung nach einem der Ansprüche 1 oder 2, **dadurch gekennzeichnet, dass** der Schieber während des Schließens der Form vorerst in seine tiefste Position (4) geführt wird um anschließend über eine Schräge (5) in die Endposition (7), die der Ausgangsposition (1) entspricht geführt wird.

4. Schiebersicherung nach einem der Ansprüche 1 bis 3, **dadurch gekennzeichnet, dass** der Schieber in seiner Endposition (7) elektromagnetisch, hydraulisch oder pneumatisch gesichert wird.

5. Schiebersicherung nach einem der Ansprüche 1 bis 4, **dadurch gekennzeichnet, dass** die Steuerung des Sicherungsvorgangs durch optische, elektrische oder elektromagnetische Steuerpunkte erfolgt.

6. Verwendung der Schiebersicherung nach einem der Ansprüche 1 bis 5 in Spritzguss- oder Druckgussverfahren.

## Claims

1. Slide lock for injection-moulding tools, with a movable locking pin (b) and a pivotable strap (a), **characterized in that** the slide lock comprises a control block (c, Figure 1), the locking pin (b) describing a defined path over a two- or three-dimensional contour in the control block (c) during the opening and closing operation of the injection mould.

2. Slide lock according to Claim 1, **characterized in that**, during the opening of the injection mould, the slide is guided over at least 2 stages (2, 3, Figure 2) deeper to a provisional end position (4).

3. Slide block according to either of Claims 1 and 2, **characterized in that**, during the closing of the mould, the slide is guided into its lowermost position (4), in order subsequently to be guided over a slope (5) into the end position (7), which corresponds to the starting position (1).

4. Slide lock according to one of Claims 1 to 3, **characterized in that**, in its end position (7), the slide is electromagnetically, hydraulically or pneumatically locked.

5. Slide lock according to one of Claims 1 to 4, **characterized in that** the control of the locking operation is performed by optical, electrical or electromagnetic control points.

6. Use of the slide lock according to one of Claims 1 to 5 in injection-moulding or pressure-diecasting processes.

## Revendications

1. Retenue de coulisseau pour des outils de moulage par injection, avec une goupille de sécurité (b) mobile et une languette (a) pouvant pivoter, **caractérisée en ce que** la retenue de coulisseau se compose d'un bloc de commande (c, figure 1), la goupille de sécurité (b) décrivant dans le bloc de commande (c) pendant le processus d'ouverture et de fermeture du moule de moulage par injection, une course définie sur un contour à 2 ou 3 dimensions.

2. Retenue de coulisseau selon la revendication 1, **caractérisée en ce que** le coulisseau est guidé pendant l'ouverture du moule de moulage par injection par au moins 2 gradins (2, 3, figure 2) plus bas vers une position finale (4) provisoire.

3. Retenue de coulisseau selon l'une quelconque des revendications 1 ou 2, **caractérisée en ce que** le coulisseau est guidé pendant la fermeture du moule tout d'abord dans sa position la plus basse (4) et est ensuite guidé par un biseau (5) dans la position finale (7) qui correspond à la position de départ (1).

4. Retenue de coulisseau selon l'une quelconque des revendications 1 à 3, **caractérisée en ce que** le coulisseau est bloqué dans sa position finale (7) de manière électromagnétique, hydraulique ou pneumatique.

5. Retenue de coulisseau selon l'une quelconque des revendications 1 à 4, **caractérisée en ce que** la commande du processus de retenue est effectuée par des points de commande optiques, électriques ou électromagnétiques.

6. Utilisation de la retenue de coulisseau selon l'une quelconque des revendications 1 à 5 dans un procédé de moulage par injection ou de coulée sous pression.
